# EUROPÄISCHE PATENTSCHRIFT

(11) **EP 1 565 370 B1**
(45) Veröffentlichungstag und Bekanntmachung des Hinweises auf die Patenterteilung: **17.12.2008**
(21) Anmeldenummer: 03780079.4
(22) Anmeldetag: 28.11.2003
(51) Int. Cl.: B62D 7/18, B62D 13/04, B62D 7/22

(54) **SCHWENKLAGER SOWIE MIT EINEM SOLCHEN AUSGESTATTETE LENKACHSE**
SWIVEL BEARING AND A STEERING AXLE EQUIPPED THEREWITH
PALIER PIVOTANT ET ESSIEU ORIENTABLE MUNI D'UN TEL PALIER

(30) Priorität: 28.11.2002 DE 20218453 U; 14.03.2003 DE 20304107 U
(43) Veröffentlichungstag der Anmeldung: 24.08.2005
(73) Patentinhaber: SAF-HOLLAND GmbH, 63856 Bessenbach-Keilberg (DE)
(72) Erfinder: KOSCHINAT, Hubert, B., 63768 Hösbach (DE)
(74) Vertreter: Schaafhausen, Ludwig R.
(86) Internationale Anmeldenummer: PCT/EP2003/013399
(87) Internationale Veröffentlichungsnummer: WO 2004/048180

(56) Entgegenhaltungen:
- DE-A- 1 455 811
- DE-A- 1 580 683
- DE-A- 3 616 998
- DE-C- 838 841
- FR-A- 2 335 359
- GB-A- 726 322
- US-A- 1 548 050
- US-A- 3 368 852
- US-A- 3 441 288

## Beschreibung

Die Erfindung bezieht sich auf eine Lenkachse mit einem Schwenklager, welche insbesondere für Fahrzeuge, wie Zugfahrzeuge, Anhänger, Sattelauflieger oder dgl., geeignet ist und insbesondere bei geringem technischen gewichts- und kostenmäßigen Aufwand alle gewünschten Funktionen des Dämpfens und Stabilisierens erfüllen und auch die erforderlichen Rückstellkräfte in dauerhaft zuverlässiger Weise gewährleisten kann.

Zu diesem Zweck zeichnet sich das Schwenklager bspw. im Wesentlichen dadurch aus, dass wenigstens ein eine Drehachse eng umschließendes ganz oder wenigstens bereichsweise elastisches radial vorgespanntes Lagerelement, welches in einer Lageröffnung eines ersten Lagerteils eingesetzt, vorzugsweise eingepresst, und mittels einer zu der Drehachse koaxial wirkenden Schraubverbindung axial gegen wenigstens eine Stirnfläche eines zweiten Lagerteils verspannt ist, vorgesehen ist. Durch Anordnung und Ausgestaltung des elastischen Lagerelements können die gewünschten Dämpfungs-, Stabilisierungs- und Rückstelleigenschaften auf zuverlässige Weise gesichert werden.

Von Vorteil ist es dabei, wenn das Lagerelement als Buchse ausgebildet ist.

Die Drehachse kann der Einfachheit halber von einem Gewindebolzen der Schraubverbindung selbst gebildet sein.

Zur Erzielung der gewünschten Funktionen wird ferner vorgeschlagen, dass das Lagerelement eine Gummi-Metall-Verbindung aufweist, bzw. aus einer solchen besteht.

In besonderer Ausgestaltung kann dabei das Lagerelement eine rohrförmige Innenhülse aus Metall, vorzugsweise aus Stahl aufweisen, auf deren Außenfläche ein elastisches Material, z.B. Gummi, aufgebracht ist, welches von einer Außenhülse ganz oder wenigstens teilweise umgeben ist.

Die Außenhülse kann dabei insbesondere als dünnwandiges Stahlrohr ausgebildet und mit hoher Vorspannung auf das elastische Material aufgepresst sein, so dass dieses die erforderliche radiale Vorspannung erhält. Die Außenhülse kann dann insoweit, also auch ganz, entfallen, als sie nicht als Lagerfläche benötigt und die Vorspannung des elastischen Materials nicht auf andere Weise, z. B. durch Einpressen des Lagerelements in die Lageröffnung, erzeugt werden kann.

Dabei kann sich das vorgespannt elastische Material als einheitliche Hülse über im Wesentlichen der gesamten Länge der Außenfläche der Innenhülse erstrecken. Es ist aber auch von Vorteil, wenn dadurch weitere Funktionen erreicht werden können, das vorgespannte elastische Material als voneinander getrennte Hülsen nur über die beiden Endbereiche der Außenfläche der Innenhülse erstrecken zu lassen.

Dabei können die Hülsen von einem oder mehreren Ringen, z.B. O-Ringen, gebildet sein.

Um das elastische Material axial unverschieblich auf der Außenfläche der Innenhülse zu sichern, kann in weiterer Ausgestaltung der Erfindung vorgesehen sein, dass jedenfalls das radial vorgespannte elastische Material über einen Teil seiner Dicke in eine oder mehrere Umfangsnut(en) der Außenfläche der Innenhülse aufgenommen ist und den benachbarten Bereich der Außenfläche der Innenhülse überragt.

Um das axiale Ausweichen des elastischen Materials nach außen zu begrenzen, können ferner die Enden der Außenhülse nach innen umgebogen sein.

Im Längenbereich zwischen den beiden in den Endbereichen der Innenhülse vorgesehenen Hülsen aus vorgespanntem elastischen Material ist bevorzugt zwischen Außenfläche der Innenhülse und Innenfläche der Außenhülse in weiterer vorteilhafter Ausgestaltung des Erfindungsgedankens wenigstens ein dauerhaft geschmiertes Gleitlager oder ein Wälzlager (Nadellager) vorgesehen. Durch die Kombination aus Gleitlager bzw. Wälzlager mit dem elastischen Material werden nicht nur die gewünschten Dämpf- und Stabilisiereigenschaften erreicht, sondern es können auch die auftretenden Radialbelastungen aufgenommen werden, ohne dass das Schwenklager radial elastisch nachgibt.

Es besteht auch die Möglichkeit, dass eine Hülse aus vorgespanntem elastischen Material auf einer Hälfte der Außenfläche der Innenhülse und auf der anderen Hälfte ein Gleitlager oder Wälzlager (Nadellager) zwischen Außenfläche der Innenhülse und Innenfläche der Außenhülse vorgesehen sind.

Diese Ausgestaltung kann mit einer Nachschmiereinrichtung für das Wälzlager ausgestattet sein.

An dem dem Wälzlager zugeordneten Ende des Lagerelements kann dabei eine Dichtung, vorzugsweise Radialwellendichtung, vorgesehen sein, um das Wälzlager nach außen abzuschließen.

Ebenso ist es für diesen Fall zweckmäßig, die zuvor genannte Dichtung so auszubilden, dass sie unter Innendruck öffnet; so können einerseits beim Nachschmieren der Schmierstoff gezielt an dieser Stelle austreten und andererseits kein Schmutz in die Lagerung eindringen.

Bei allen zuvor erwähnten Ausführungsformen des Schwenklagers ist von Vorteil, wenn das elastische Material radial derart vorgespannt ist, dass der vorgesehene Schwenkwinkel zwischen den beiden Lagerteilen alleine durch dessen Elastizität erreicht wird und bei Wegnehmen der Verdrehkräfte diese selbsttätig in ihre Ausgangslage zurückkehren. Eine solche Ausführung ist insbesondere für den Einsatz in Lenkachsen geeignet.

Des weiteren kann vorgesehen sein, dass erst nach Überschreiten eines vorgegebenen Schwenkwinkels das elastische Material innen gegenüber der Innenhülse oder außen gegenüber der Außenhülse durchrutscht. Zu diesem Zweck kann das elastische Material mit der Innenhülse und/oder der Außenhülse durch Verkleben, Vulkanisieren und/oder Formschluss gegen Durchrutschen gesichert sein.

Erfindungsgemäß sind an dem Achskörper der Lenkachse, die insbesondere eine Nachlauflenkachse ist, die Räder mittels einer Spurstange miteinander verbundenen Lenkgabeln angelenkt, mit einem zwischen dem Achskörper und den Rädern bzw. den Lenkgabeln und der Spurstange vorgesehenen Schwenklager.

Derartige Lenkachsen sind an sich bekannt (vgl. DE 19 45 589 A1, DE 44 05 325 C1 und DE 197 16 150 A1). Die dabei vorgesehenen Stabilisierungssysteme sollen Flatterbewegungen der Räder bei Geradeausfahrt verhindern, über einen Nachlaufeffekt lenken, die Lenkbewegungen bei Kurvenfahrt dämpfen und die Rücklenkkraft unterstützen. Die Funktionen "Stabilisieren" und "Dämpfen" werden bei den bekannten Nachlauflenkachsen nur mit erheblichem technischem Aufwand erfüllt: Das Dämpfen von Auslenk- bzw. Lenkbewegungen erfolgt praktisch ausschließlich über hydraulische Lenkungsdämpfer oder Gasdruckdämpfer, welche meist einerseits am Achskörper und andererseits an der Spurstange befestigt sind und somit während der Lenkbewegungen aus- und einfahren. Für das Stabilisieren, d. h. Vermeiden von Flatterbewegungen der gelenkten Räder in Geradeausfahrt ist bisher weiterer mechanischer Aufwand nötig, wie z. B. druckluftbeaufschlagte Stabilisiereinrichtungen, wie sie u. a. aus der DE 1 945 589 A1 und der DE 73 38 796 U hervorgehen, oder z. B. rein mechanische Einrichtungen gemäß DE 44 05 325 C1 und DE 197 16 150 A1. Derartige Dämpfungs- und Stabilisierungssysteme genügen zwar im Allgemeinen den Anforderungen an die allgemeine Fahrpraxis. Insbesondere aufgrund des hohen technischen Aufwandes können sich jedoch systembedingte Auffälligkeiten zeigen, welche sich bspw. in einem zu späten oder gar nicht stattfindenden Einlenken der Achse bei leichten und unbeladenen Fahrzeugen oder in unerwünschten Ausschwenkungen des Fahrzeughinterteils bei voll beladenen insbesondere kurzbauenden Fahrzeugen in kurvenreichen Strecken und bei scharfer Fahrweise äußern.

Lenkachsen, insbesondere Kraftfahrzeug-Vorderachsen oder zwangsgelenkte Achsen in Sattelaufliegern müssen sich möglichst ohne großen Widerstand lenken lassen. Hierfür wird mitunter ein großer technischer Aufwand bis hin zu nadelgelagerten Lenkbolzen betrieben. Auch bei Nachlauflenkachsen bisheriger Konstruktion wird mindestens über den Aufwand von Lagerbuchsen, welche auf gehärteten Lenkschenkelbolzen laufen, eine Leichtgängigkeit der Lenkbewegung erreicht. Da Lenkbewegungen an Nachlauflenkachsen nur aufgrund von Querkräften in Verbindung mit mindestens einer starren Führungsachse hervorgerufen werden und keine führenden Lenkgestänge etc. zur Verfügung stehen, müssen diese mit Hilfe von erheblichem zusätzlichem Aufwand, nämlich mit Dämpfungs- und Stabilisierungseinrichtungen wieder gewissermaßen "kontrolliert schwergängig" gemacht werden, um die beschriebenen Funktionen zu erfüllen.

Aus der FR 2 335 359 die den Oberbegriff des Anspruchs 1 offenbart, ist ein Schwenklager bekannt, das zwischen dem Achskörper und den Rädern vorgesehen ist. Das Schwenklager ist mit einem elastisch radial vorgespannten Lagerelement versehen, das in einer Lageröffnung eingesetzt ist, die in der dem Achskörper zugeordneten Lenkgabel ausgebildet ist. Weiter offenbart die US 3,368,852 ein Lagerelement, das Bestandteil einer einschnittigen Verbindung ist, mit einer inneren Hülse, einer äußeren Hülse und einem dazwischen angeordneten elastischen Element.

Aufgabe der vorliegenden Erfindung ist es demgegenüber, eine kostengünstige Lenkachse vorzuschlagen, welche mit geringem technischen Aufwand alle Funktionen des Dämpfens und Stabilisierens, dauerhaft und zuverlässig erfüllt.

Diese Aufgabe wird mit einer Lenkachse mit den Merkmalen des Anspruchs 1 gelöst. Vorteilhafte Ausgestaltungen sind in den Unteransprüchen angegeben.

Das Schwenklager zwischen Lenkgabeln und Spurstange unterstützt durch seine Dämpfung die Stabilisierung durch die Schwenklager zwischen Achskörper und Lenkgabeln. Die Summe aller an der Verdrehung beteiligten Federraten führen zu dem gewünschten Rücklenkeffekt.

In Weiterbildung des die Lenkachse bestimmenden Erfindungsgedankens ist vorgesehen, dass zwischen einer Stirnfläche der Achsfaust des Achskörpers und einer Abstützfläche einer die Achsfaust aufnehmenden Aussparung der Lagergabel ein Paar von unter axialer Spannung miteinander zugekehrten welligen Anlageflächen aneinander gehaltenen Wellscheiben angeordnet ist, wobei die eine Wellenscheibe drehfest mit der Achsfaust und die andere Wellenscheibe drehfest mit der Lenkgabel verbunden sind und wobei bei Geradeausfahrt die beiden Wellenscheiben, vorzugsweise ganzflächig oder im Wesentlichen ganzflächig, aneinander liegen und eine Raststellung bilden und bei Verdrehen der Wellenscheiben gegeneinander bereichsweise zwischen ihnen Spalten entstehen und sich die aneinander liegenden Flächenbereiche der welligen Anlageflächen mit ansteigendem Lenkwinkel verkleinern.

In der Raststellung der Wellscheiben werden so bei schneller Geradeausfahrt Flatterbewegungen der Räder, welche durch Unwuchten und/oder Straßenunebenheiten auftreten können, verhindert. Während des Lenkvorganges verdrehen sich beide Wellscheiben gegeneinander derart, dass sich die Berührungsbereiche der Anlageflächen je nach Lenkwinkel verkleinern oder vergrößern. Mit zunehmendem Lenkwinkel wird das Fahrzeug den schrägen Ebenen der Wellscheiben entsprechend angehoben und gleichzeitig das elastische Material in dem wenigstens einen Lagerelement verformt. Durch die Federraten des elastischen Materials erfolgt eine Unterstützung der Rücklenkkraft, welche um so größer ist, je größer der Lenkwinkel ist. Der Einsatz von Wellscheiben ist an sich bekannt (vgl. DE 36 16 998 A1). Dort ist jedoch lediglich beabsichtigt, die Wellscheiben als Druckscheiben in Verbindung mit je einer Schraubenfeder zur Stabilisierung der Geradeausfahrt einzusetzen. Es erfolgt jedoch dort keine lenkwinkelabhängige Rücklenkkraft und der übliche Aufwand buchsengelagerter und gehärteter Lenkschenkelbolzen ist zwingend erforderlich.

Es zeigen:
- Fig. 1: eine die Erfindung aufweisende Nachlauflenkachse mit Führungslenkern für Luftfederung in Draufsicht bei Geradeausfahrt,
- Fig. 2: die Nachlauflenkachse gemäß Fig. 1 in Draufsicht bei eingelenkten Rädern,
- Fig. 3: ein Vertikalschnitt durch eine erfindungsgemäße Lenkgabellagerung und Spurstangenlagerung,
- Fig. 3A: eine Draufsicht auf die Anordnung gemäß Fig. 3,
- Fig. 4A: ein erfindungsgemäßes Wellscheibenpaar in Geradeausfahrtposition
- Fig. 4B: das Wellenscheibenpaar gemäß Fig. 4A bei eingelenktem Zustand der Räder, sowie

Fig. 5 und 6 zwei weitere Ausführungsformen eines Schwenklagers.

Zunächst wird die Erfindung am Beispiel einer ersten Ausführungsform eines erfindungsgemäßen Schwenklagers 1 beim Einsatz in einer Nachlauflenkachse eines Fahrzeugs näher erläutert.

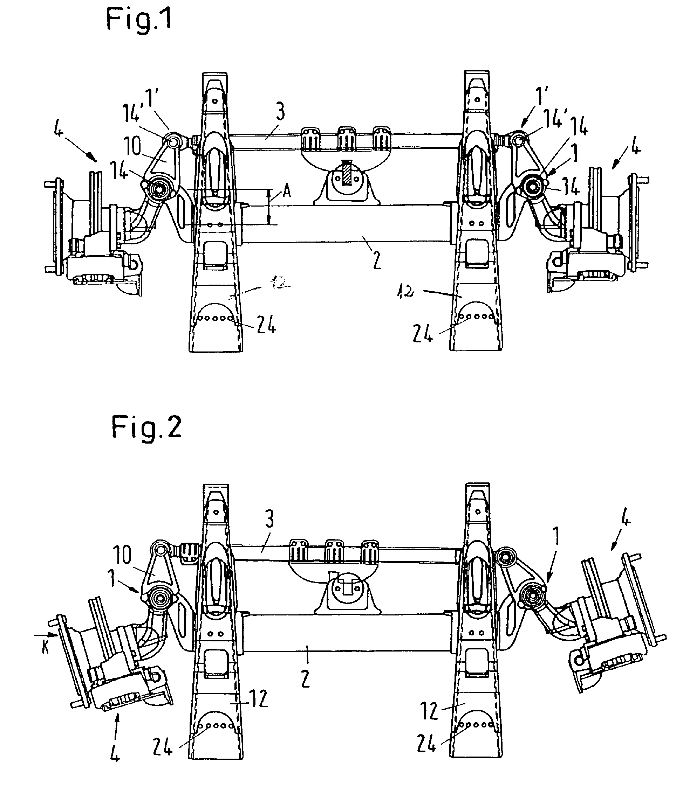

Die in den Figuren 1 und 2 dargestellte als Nachlauflenkachse ausgebildete Lenkachse hat einen an zwei im Abstand voneinander angeordneten, an ihrem jeweiligen Vorderende am Fahrzeugchassis angelenkten z. B. aus Blech gebildeten und an ihrem hinteren Ende Löcher z. B. für die Aufnahme von Luftfederelementen aufweisenden Führungslenkern 12 angebrachten z. B. festgespannten oder festgeschweißten Achskörper 2 als feststehendes Lagerteil, an dessen äußeren in Fahrtrichtung gekröpften Enden je eine Lenkgabel 10 als bewegliches Lagerteil angelenkt ist. Die Führungslenker 12 können auch durch herkömmliche Federlenker oder Blattfedern ersetzt sein. Die von dem Gewindebolzen einer Schraubverbindung 6 gebildete Drehachse 14 des Schwenklagers liegen im Abstand A in Fahrtrichtung vor der Achsmitte. Eine Spurstange 3 sorgt für die Spurtreue der Räder 4, indem die den Rädern 4 gegenüber liegenden Enden der Lenkgabel 10 über Schwenklager 1 mit dem äußeren Ende der Spurstange 3 verbunden sind. Die Nachlauflenkachse hat keine mechanischen Lenkübertragungen, wie Gestänge, Seilzüge, Hydraulikzylinder etc.. Die Lenkwirkung erfolgt ausschließlich über die bei Kurvenfahrt auftretenden Seitenkräfte K zwischen Reifen und Straße. Sie müssen deshalb mit mindestens einer starren Führungsachse, welche davor oder dahinter angeordnet sein kann, gemeinsam laufen.

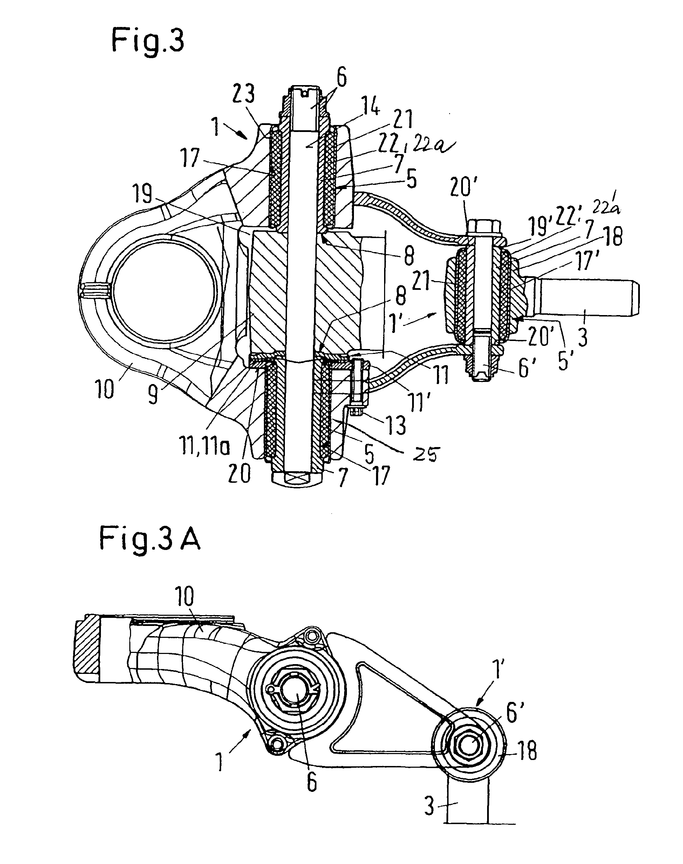

In den Figuren 3 und 3A ist das Funktionsprinzip der erfindungsgemäßen Lenkachse und des dabei zwischen Achskörper 2 und Lenkgabel 10 jeweils eingesetzten Schwenklagers 1 verdeutlicht. Anstelle von sonst üblichen gehärteten Lenkschenkelbolzen, welche buchsen- oder nadelgelagert sind, sind in dem jeweiligen Schwenklager 1 zwischen Achskörper 2 und Lenkgabel 10 zur Ausbildung eines der Stabilisierung und Dämpfung dienenden Schwenklagers 1 die jeweilige Drehachse 14 des Schwenklagers 1 umschließende elastische Lagerelemente 5 vorgesehen und zwar im dargestellten Ausführungsbeispiel innerhalb von Lageröffnungen 17 der Lenkgabel 10 oberhalb und unterhalb der von der Drehachse 14 durchsetzten Achsfaust 9 des Achskörpers 2.

Die Lagerelemente 5 weisen eine rohrförmige starre Innenhülse 7, vorzugsweise aus Stahl auf, welche auf ihrer Außenumfangsfläche ein elastisches Material 22, wie eine Gummimischung, als Buchse aufgebracht trägt. Das elastische Material 22 ist von einer Außenhülse 21 aus einem dünnwandigen Stahlrohr umgeben, welches zur Erzielung einer hohen Belastbarkeit auf den Mantel aus elastischem Material 22 mit hoher Verspannung aufgepresst ist.

Damit das elastische Material 22 einerseits bei einer hohen Radialbeanspruchung an den Enden nicht ausquillt, andererseits aber für den im Fahrbetrieb auftretenden Verformungsgrad eine ausreichend dicke und elastische Materialschicht vorhanden sein kann, sind in dem dargestellten Ausführungsbeispiel die Enden der Innenhülse 7 nach innen hin verdickt, indem z. B. ein dickwandiges Rohr mit Ausnahme der Enden unter Bildung einer Umfangsnut 25 schlanker gedreht ist. Auch können zu diesem Zweck die Enden der Außenhülse 21 nach innen gebogen sein, um das elastische Material 22 auch stirnseitig einzuschließen.

Die Lagerelemente 5 sind jeweils in ihre Lageröffnungen 17 eingepresst. Die Innenhülsen 7 der Lagerelemente 5 sind mittels einer Schraubverbindung 6, welche mit einem die Drehachse 14 bildenden Gewindebolzen sowohl die Lageröffnungen 17 der Lenkgabel 10 als auch die Achsfaust 9 des Achskörpers 2 durchgreift, jeweils axial gegen eine Stirnfläche 8 der Achsfaust 9 verspannt. Dabei ist das buchsenartige Lagerelement 5, welches aus der beschriebenen Gummi-Metall-Verbindung gebildet ist, auf dem die Drehachse 14 bildenden Gewindebolzen der Schraubverbindung 6 passend aufgenommen. Die Lagerelemente 5 erfüllen so die Funktion sowohl der gelenkigen Lagerung zwischen feststehendem Achskörper 2 und beweglicher Lenkgabel 10 als auch des Dämpfens der Lenkbewegung sowie des Unterstützens der Rücklenkkraft und damit der Stabilisierung. Sie bildet somit einen wesentlichen Bestandteil eines Schwenklagers 1, welches auch anderweitig, also nicht nur an einer Lenkachse eines Fahrzeugs mit Vorteil eingesetzt werden kann.

Die feststehende Achsfaust 9 ist in einer Aussparung 19 der beweglichen Lenkergabel 10 aufgenommen. Zwischen der unteren Stirnfläche 8 der Achsfaust 9 und einer dieser gegenüber liegenden Abstützfläche 20 der Aussparung 19 kann bei einer besonderen Ausführung des Schwenklagers 1 zur Bildung einer Rücklenkeinrichtung ein Paar von Wellscheiben 11, 11a positioniert sein. Die untere Wellscheibe 11 a ist über mindestens ein Sicherungselement 13 an der Lenkgabel 10 verdrehsicher gehalten. Die obere Wellscheibe 11 ist zwischen der Innenhülse 7 des unteren Lagerelementes 5 und der unteren Stirnfläche 8 der Achsfaust 9 positioniert und verdrehsicher an der Achsfaust 9 gehalten.

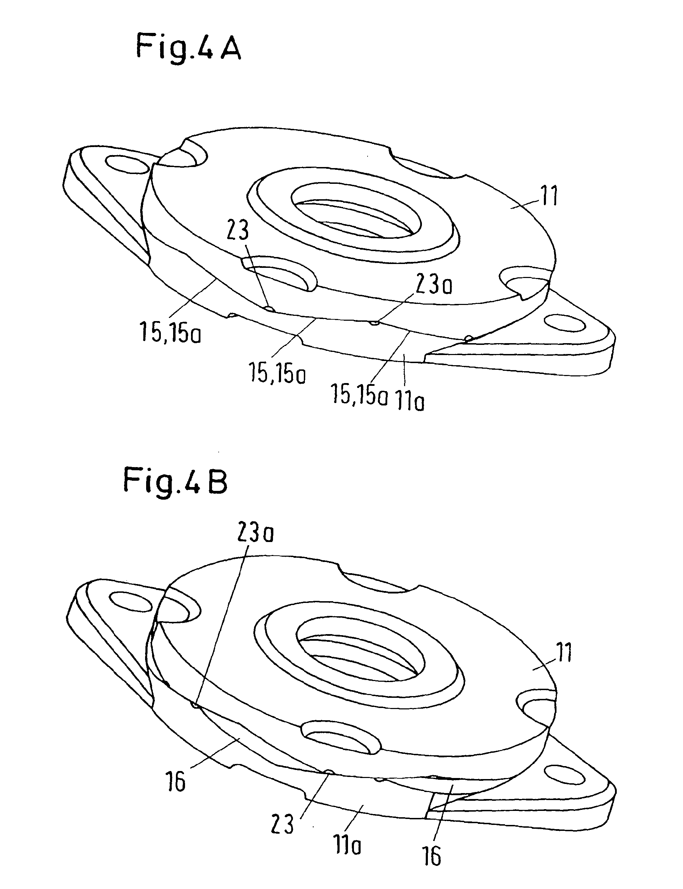

Wie insbesondere aus den Figuren 4A und 4B ersichtlich, haben die Wellscheiben 11, 11 a einander zugekehrte wellige Anlageflächen 15, 15a, welche in Geradeausfahrtposition möglichst großflächig aneinander liegen und eine Raststellung bilden. Die Raststellung verhindert bei schneller Geradeausfahrt Flatterbewegungen der Räder, welche durch Unwuchten und/oder Straßenunebenheiten auftreten können. Während des Lenkvorganges drehen sich die Wellscheiben 11, 11a gegeneinander, so dass bereichsweise Spalte 16 entstehen und sich die Flächenbereiche, in welchen die welligen Anlageflächen 15, 15a aneinander liegen, mit zunehmendem Lenkwinkel verkleinern. Auf diese Weise wird mit zunehmendem Lenkwinkel das Fahrzeug den zusammenwirkenden Schrägflächen der welligen Anlageflächen 15, 15a entsprechend angehoben und gleichzeitig das elastische Lagerelement 5 verformt. Durch die Federrate der Lagerelemente 5 wird eine Rücklenkunterstützung erzeugt, welche um so größer ist, je größer der Lenkwinkel ist. Die jeweiligen Wellenspitzen der Wellscheiben 11, 11a sind unter Bildung von radialen Nuten 23, 23a zur Aufnahme von Schmierstoff konkav ausgebildet. Die Nuten 23, 23a können auch eventuell anfallenden Abrieb der welligen Anlageflächen 15, 15a aufnehmen. Des weiteren können die welligen Anlageflächen 15, 15a durch (nicht dargestellte) elastische Dichtmanschetten vor äußerer Schmutzeinwirkung und/oder Spritzwasser geschützt sein. Beide Maßnahmen dienen der Erhöhung der Nutzungsdauer.

Bei dem dargestellten Ausführungsbeispiel sind auch die jeweiligen Lenkverbindungen der Spurstangenenden 18 mit der Lenkgabel 10 als erfindungsgemäße Schwenklager 1' mit Dämpfungs- und Stabilisierungseigenschaften ausgebildet. Zu diesem Zweck ist wenigstens eine die zugehörige Drehachse 14' des Schwenklagers 1' umschließendes elastisches Lagerelement 5' vorgesehen, welches in eine Lageröffnung 17' der Lenkgabel 10 eingesetzt, vorzugsweise eingepresst und mittels einer zu der Drehachse 14' koaxialen Schraubverbindung 6', deren Gewindebolzen die Drehachse 14' bildet, radial gegen die Innenfläche der Lageröffnung 17' und axial gegen einander gegenüberliegende Abstützflächen 20' eine Aussparung 19' der Lenkgabel 10 verspannt. Das Lagerelement 5' besitzt eine Innenhülse 7', in welche der Gewindebolzen der Schraubverbindung 6' eingepasst ist. Das buchsenartig ausgebildete Lagerelement 5' ist wie das Lagerelement 5 von einer Gummi-Metall-Verbindung gebildet, indem auf die Innenhülse 7' ein elastisches Material 22' aufgebracht und auf letzteres eine dünnwandige Außenhülse 21' aus Stahl aufgepresst ist. Dieses Schwenklager 1' unterstützt als Dämpfungseinrichtung die Wirkung der in dem Schwenklager 1 zwischen Achskörper 2 und Lenkgabel 10 vorgesehenen Stabilisierung. Unabhängig davon, wie die Spurstangenlagerung ausgeführt ist, führt die Summe aller an der Verdrehung beteiligten Federraten zu dem gewünschten Rücklenkeffekt.

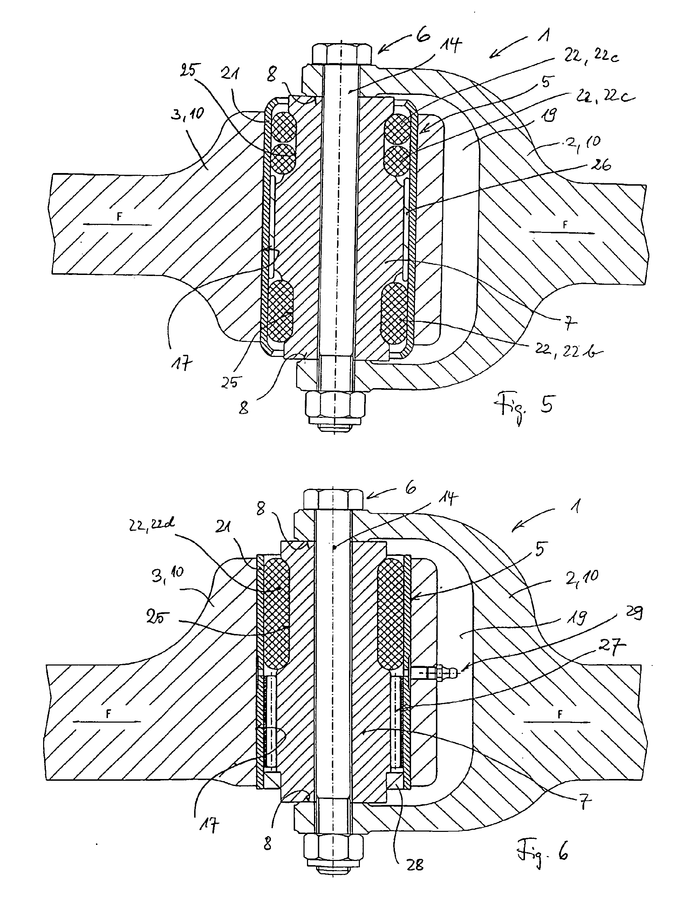

In den Fig. 5 und 6 sind zwei weitere Ausführungsformen eines erfindungsgemäßen Schwenklagers 1 dargestellt, welches vorzugsweise bei Lenkachsen der zuvor geschilderten Art Einsatz finden können, aber allgemein als Konstruktionselement verwendbar ist.

Bei dem wartungsfreien Schwenklager 1 nach Fig. 5 ist das Lagerelement 5 an seinen beiden Enden über radial vorgespannte elastische Hülsen 22, 22b, 22c verschlossen. Die elastischen Hülsen 22b, 22c können aus jeweils einem oder mehreren Einzelelementen, z.B. großvolumigen O-Ringen 22c bestehen. Zwischen den beiden radial vorgespannten elastischen Elementen 22, 22b, 22c befindet sich in dem Zwischenraum zwischen der Außenfläche der Innenhülse 7 und der Innenfläche der Außenhülse 21 ein dauerhaft geschmiertes Gleitlager 26. Der Kraftangriff F in Richtung Radialbelastung ist mittig zum Schwenklager 1 dargestellt.

Bei der in Fig. 6 dargestellten Variante eines erfindungsgemäßen Schwenklagers 1 ist neben einem als Wälzlager ausgebildeten Radiallager 27 auf der Außenfläche der Innenhülse 7 nur auf einer Seite ein radial vorgespanntes elastisches Element 22, 22b vorgesehen und an dem anderen Ende eine Dichtung 28, z.B. ein handelsüblicher Radialwellendichtring, vorgesehen. Diese Ausführung kann mit einer Nachschmiereinrichtung 29 ausgestattet sein, wobei die Dichtung 28 zweckmäßigerweise als bei Innendruck nach außen öffnender Dichtring ausgebildet ist, so dass einerseits beim Nachschmieren der Schmierstoff gezielt an dieser Stelle austreten kann und andererseits kein Schmutz in die Lagerung eindringt. An Stelle des dargestellten Wälzlagers 27 kann auch hier ein Gleitlager 26 eingesetzt sein.

Die elastischen Elemente 22, 22a bis 22d sind bei allen Varianten so vorgespannt, dass der jeweils für den Verwendungszweck vorgesehene Schwenkwinkel allein durch deren Elastizität erreicht wird, ohne dass eine Gleitbewegung zwischen dem elastischen Material und der Innenhülse 7 oder der Außenhülse 21 stattfindet, und dass sich durch diese Eigenschaft das Schwenklager 1 bei Wegnehmen der Verdrehkräfte selbsttätig in die Ausgangslage zurückstellt. Dieses kann konstruktiv auch so ausgestaltet sein, dass erst nach Überschreiten eines Schwenkwinkels das elastische Element 22, 22a bis 22b innen oder außen durchrutscht, so dass es innerlich nicht abreißt, aber dann mit der Konsequenz, dass die Gelenkteile nicht mehr vollständig in die Ausgangslage zurückfedern. Um ein vorzeitiges Durchrutschen zu vermeiden, kann das elastische Material zusätzlich über Verkleben oder Vulkanisieren entweder mit der Innenhülse oder mit der Außenhülse fest oder über Formschluss (z.B. über Verzahnungen oder über Löcher in den Metallteilen) verbunden sein.

Bei den in den Fig. 5 und 6 dargestellten Varianten, welche an der Stelle der Schwenklager 1, 1' in den Fig. 1 bis 3A eingesetzt werden können, ist wesentlich die Kombination eines Radiallagers mit einem elastisch federnden Material, welches die Funktion erfüllt, radial belastbar zu sein, ohne dass es radial elastisch nachgibt und rechtzeitig die beiden Gelenkteile (z.B. Faust und Gabel) bis zu den jeweils für den Verwendungszweck vorgesehenen Schwenkwinkel schwenkbar sind und bei Wegnahme der Schwenkkraft die Gelenkteile in die Ausgangslage zurückfedern. Dabei ist vorteilhaft, ein gezieltes zerstörungsfreies Durchrutschen nach Überschreiten eines bestimmten Schwenkwinkels.

### Bezugszeichenliste:

- 1, 1': Stabilisierungs- und Schwenklager (als Teile einer Dämpfungseinrichtung)
- 2: Lagerteil (Achskörper)
- 3: Lagerteil (Spurstange)
- 4: Räder
- 5, 5': Lagerelemente
- 6, 6': Schraubverbindungen
- 7, 7': Innenhülsen
- 8: Stirnflächen
- 9: Achsfaust
- 10: Lagerteil (Lenkgabeln)
- 11, 11a: Wellscheiben
- 12: Führungslenker
- 13: Sicherungselement
- 14, 14': Drehachsen
- 15, 15a: wellige Anlageflächen
- 16: Spalte
- 17, 17': Lageröffnungen
- 18: Spurstangenenden
- 19, 19': Aussparungen
- 20, 20': Abstützflächen
- 21, 21': Außenhülsen
- 22, 22': elastisches Material
- 22a, 22a', 22b, 22c, 22d: Hülsen bzw. Ringe
- 23, 23': Nuten
- 24: Löcher
- 25: Umfangsnuten
- 26: Gleitlager
- 27: Wälzlager
- 28: Dichtung (Radialwellendichtung)
- 29: Nachschmiereinrichtung

- A: Abstand
- F: Kraftangriff
- K: Seitenkräfte

## Patentansprüche

1. Lenkachse, insbesondere Nachlauflenkachse, für Fahrzeuge, wie Zugfahrzeuge, Anhänger, Sattelauflieger oder dgl., an deren Achskörper (2) die Räder (4) an mittels einer Spurstange (3) miteinander verbundenen Lenkgabeln (10) angelenkt sind, mit einem zwischen dem Achskörper (2) und den Rädern (4) vorgesehenen Schwenklager (1) mit zwei zueinander verschwenkbaren Lagerteilen (2, 10), von denen eine Lenkgabel (10) und eine Achsfaust (9) des Achskörpers (2) jeweils das erste bzw. zweite Lagerteil (10, 2) bilden, wobei das Schwenklager (1) wenigstens ein eine Drehachse (14) eng umschließendes ganz oder wenigstens bereichsweise elastisches radial vorgespanntes Lagerelement (5) aufweist, welches in eine Lageröffnung (17) des ersten Lagerteils (10) eingesetzt, vorzugsweise eingepresst, ist, **dadurch gekennzeichnet, dass** das Lagerelement (5) eine rohrförmige Innenhülse (7) aus Metall, vorzugsweise aus Stahl, aufweist, auf deren Außenfläche ein elastisches Material (22), z. B. Gummi, aufgebracht ist, welches von einer Außenhülse (21) ganz oder wenigstens teilweise umgeben ist, und dass die Innenhülse (7) des Lagerelements (5) mittels einer zu der Drehachse (14) koaxial wirkenden Schraubverbindung (6) axial gegen wenigstens eine Stirnfläche (8) der Achsfaust (9) des zweiten Lagerteils (2) verspannt ist.

2. Lenkachse nach Anspruch 1, **dadurch gekennzeichnet, dass** das Lagerelement (5) als Buchse ausgebildet ist.

3. Lenkachse nach Anspruch 1 oder 2, **dadurch gekennzeichnet, dass** die Drehachse (14) von einem Gewindebolzen der Schraubverbindung (6) gebildet ist.

4. Lenkachse nach einem der vorhergehenden Ansprüche, **dadurch gekennzeichnet, dass** das Lagerelement (5) eine Gummi-Metall-Verbindung aufweist bzw. aus einer solchen besteht.

5. Lenkachse nach einem der vorhergehenden Ansprüche, **dadurch gekennzeichnet, dass** die Außenhülse (21) als dünnwandiges Stahlrohr ausgebildet und mit hoher Vorspannung auf das elastische Material (22) aufgepresst ist.

6. Lenkachse nach einem der vorhergehenden Ansprüche, **dadurch gekennzeichnet, dass** sich das vorgespannte elastische Material (22) als einheitliche Hülse (22a) über im Wesentlichen die gesamte Länge der Außenfläche der Innenhülse (7) erstreckt.

7. Lenkachse nach einem der Ansprüche 1 bis 5, **dadurch gekennzeichnet, dass** sich das vorgespannte elastische Material (22) als voneinander getrennte Hülsen (22b) nur über die beiden Endbereiche der Außenfläche der Innenhülse (7) erstreckt.

8. Lenkachse nach einem der vorhergehenden Ansprüche, **dadurch gekennzeichnet, dass** die Hülsen (22a, 22b) von einem oder mehreren Ringen, z.B. O-Ringen (22c), gebildet sind.

9. Lenkachse nach einem der vorhergehenden Ansprüche, **dadurch gekennzeichnet, dass** das elastische Material (22) jedenfalls über einen Teil seiner Dicke in einer oder mehreren Umfangsnuten (25) der Außenfläche der Innenhülse (7) aufgenommen ist und den benachbarten Bereich der Außenfläche der Innenhülse (7) überragt.

10. Lenkachse nach einem der Ansprüche 5 bis 6, **dadurch gekennzeichnet, dass** die Enden der Außenhülse (23) nach innen gebogen sind.

11. Lenkachse nach einem der Ansprüche 7 bis 9, **dadurch gekennzeichnet, dass** zwischen den beiden in den Endbereichen der Innenhülse (7) vorgesehenen Hülsen (22b) aus vorgespanntem elastischen Material (22) zwischen Außenfläche der Innenhülse (7) und Innenfläche der Außenhülse (23) wenigstens ein dauerhaft geschmiertes Gleitlager (26) oder ein Wälzlager (27) vorgesehen ist.

12. Lenkachse nach einem der Ansprüche 4 bis 11, **dadurch gekennzeichnet, dass** eine Hülse (22d) aus vorgespanntem elastischen Material (22) nur auf einer Hälfte der Außenfläche der Innenhülse (7) und auf der anderen Hälfte ein Gleitlager (26) oder Wälzlager (27) zwischen Außenfläche der Innenhülse (7) und Innenfläche der Außenhülse (23) vorgesehen sind.

13. Lenkachse nach Anspruch 11 oder 12, **gekennzeichnet durch** eine Nachschmiereinrichtung (29) für das Wälzlager (27).

14. Lenkachse nach einem der Ansprüche 11 bis 13, **dadurch gekennzeichnet, dass** das Wälzlager (27) nach außen von einer Dichtung (28), z.B. einer Ra,dialwellendichtung, abgeschlossen ist.

15. Lenkachse nach Anspruch 14, **dadurch gekennzeichnet, dass** die Dichtung (28) als bei Innendruck nach außen öffnende Dichtung ausgebildet ist.

16. Lenkachse nach einem der vorhergehenden Ansprüche, **dadurch gekennzeichnet, dass** das elastische Material (22) mit der Innenhülse (7) und/oder Außenhülse (21) durch Verkleben, Vulkanisieren und/oder Formschluss gegen Durchrutschen gesichert ist.

17. Lenkachse nach einem der vorhergehenden Ansprüche, **dadurch gekennzeichnet, dass** zwischen einer Stirnfläche (8) der Achsfaust (9) des Achskörpers (2) und einer Abstützfläche (20) einer die Achsfaust (9) aufnehmenden Aussparung (19) der Lenkergabel (10) ein Paar von unter axialer Spannung mit einander zugekehrten welligen Anlageflächen (15, 15a) aneinander gehaltenen Wellenscheiben (11, 11a) angeordnet ist, wobei die eine Wellenscheibe (11a) drehfest mit der Achsfaust (9) und die andere Wellenscheibe (11a) drehfest mit der Lenkgabel (10) verbunden sind, wobei bei Geradeausfahrt die beiden Wellenscheiben (11, 11a), vorzugsweise ganzflächig oder im Wesentlichen ganzflächig, aneinander liegen und eine Raststellung bilden und bei Verdrehen der Wellenscheiben (11, 11a) gegeneinander bereichsweise zwischen ihnen Spalten (16) entstehen, und wobei sich die aneinanderliegenden Flächenbereiche der welligen Anlageflächen (15, 15a) mit ansteigendem Lenkwinkel verkleinern.

## Claims

1. A steering axle, in particular a trailing steering axle for motor vehicles such as towing vehicles, trailers, semi-trailers or the like, on whose axle beam (2) the wheels (4) are articulated by steering forks (10) connected to one another by means of a tie rod (3), with a swivel bearing (1) provided between the axle beam (2) and the wheels (4) comprising two bearing parts (2, 10) which can be swivelled with respect to one another, of which one steering fork (10) and one axle fist (9) of the axle beam (2) respectively form the first or the second bearing part (10, 2), wherein the swivel bearing (1) comprises at least one elastic radially prestressed bearing element (5) entirely or at least locally closely encompassing a pivot axle (14), which is set into, preferably pressed into, a bearing opening (17) of the first bearing part (10), **characterised in that** the bearing element (5) comprises a tubular inner sleeve (7) of metal, preferably of steel, on whose outer surface an elastic material (22), for example rubber, is applied, which is entirely or at least partially encompassed by an outer sleeve (21) and that the inner sleeve (7) of the bearing element (5) is clamped by means of a bolt connection (6) coaxially acting with respect to the pivot axle (14) axially against at least one front face (8) of the axle fist (9) of the second bearing part (2).

2. The steering axle according to claim 1, **characterised in that** the bearing element (5) is configured as a bushing.

3. The steering axle according to claim 1 or 2, **characterised in that** the pivot axle (14) is formed by a threaded bolt of the bolt connection (6).

4. The steering axle according to one of the preceding claims, **characterised in that** the bearing element (5) comprises a rubber-metal combination or is comprised of such.

5. The steering axle according to one of the preceding claims, **characterised in that** the outer sleeve (21) is configured as a thin-walled steel tube and is forced onto the elastic material (22) under high pre-stress.

6. The steering axle according to one of the preceding claims, **characterised in that** the pre-stressed elastic material (22) extends as an integral sleeve (22a) over substantially the entire length of the outer surface of the inner sleeve (7).

7. The steering axle according to one of claims 1 to 5, **characterised in that** the pre-stressed elastic material (22) extends as separate sleeves (22b) only over the two end regions of the outer surface of the inner sleeve (7).

8. The steering axle according to one of the preceding claims, **characterised in that** the sleeves (22a, 22b) are formed by one or several rings, for example O-rings (22c).

9. The steering axle according to one of the preceding claims, **characterised in that** the elastic material (22) in any case over a portion of its thickness is received in one or several circumferential grooves (25) of the outer surface of the inner sleeve (7) and projects beyond the adjacent region of the outer surface of the inner sleeve (7).

10. The steering axle according to one of claims 5 to 6, **characterised in that** the ends of the outer sleeve (23) are bent inwardly.

11. The steering axle according to one of claims 7 to 9, **characterised in that** between the two sleeves (22b), provided in the end regions of the inner sleeve (7), of pre-stressed elastic material (22), between the outer surface of the inner sleeve (7) and the inner surface of the outer sleeve (23) there is provided at least one permanently lubricated slide bearing (26) or a roller bearing (27).

12. The steering axle according to one of claims 4 to 11, **characterised in that** a sleeve (22d) of a pre-stressed elastic material (22) is provided only on one half of the outer surface of the inner sleeve (7) and on the other half is provided a slide bearing (26) or roller bearing (27) between the outer surface of the inner sleeve (7) and the inner surface of the outer sleeve (23).

13. The steering axle according to claim 11 or 12, **characterised by** a re-lubrication device (29) for the roller bearing (27).

14. The steering axle according to one of claims 11 to 13, **characterised in that** the roller bearing (27) is closed towards the outside by a sealing (28), for example a radial shaft sealing.

15. The steering axle according to claim 14, **characterised in that** the sealing (28) is configured as a sealing opening towards the outside under internal pressure.

16. The steering axle according to one of the preceding claims, **characterised in that** the elastic material (22) is secured with the inner sleeve (7) and/or outer sleeve (21) by adhesion, vulcanization and/or form fitting against slipping through.

17. The steering axle according to one of the preceding claims, **characterised in that** between a front face (8) of the axle fist (9) of the axle beam (2) and a staying face (20) of a recess (19) receiving the axle fist (9) of the steering forks (10) there is disposed a pair of undulated washers (11, 11a) held on one another under axial stress with undulated contact faces (15, 15a) facing one another, wherein the one undulated washer (11a) is connected in a torsion-tight manner to the axle fist (9) and the other undulated washer (11a) is connected in a torsion-tight manner to the steering fork (10), wherein during straight-ahead driving the two undulated washers (11, 11a) are in contact on one another preferably over the entire surface or substantially over the entire surface, and form a latching position and, during twisting of the undulated washers (11, 11a) towards one another, gaps (16) are formed locally therebetween, and wherein the areal regions of the undulated contact faces (15, 15a) in contact with one another decrease with increasing steering angle.

## Revendications

1. Essieu orientable, notamment essieu orientable suiveur, prévu pour des véhicules, comme des véhicules ferroviaires, des remorques, des semi-remorques ou similaire, sur le corps d'axe (2) duquel les roues (4) sont articulées sur des fourches de guidage (10) reliées les unes aux autres au moyen d'une barre d'accouplement (3), comportant un palier pivotant (1) prévu entre le corps d'axe (2) et les roues (4) avec deux parties de palier (2,10) basculables l'une par rapport à l'autre, desquelles une fourche de guidage (10) et une rotule pour demi-essieu (9) du corps d'axe (2) forment respectivement la première et la deuxième partie de palier (10,2), moyennant quoi le palier pivotant (1) présente au moins un élément de palier (5) précontraint radialement, totalement ou au moins partiellement élastique, entourant étroitement un axe de rotation (14), lequel est enfoncé, de préférence pressé dans une ouverture de palier (17) de la première partie de palier (10), **caractérisé en ce que** l'élément de palier (5) présente une douille intérieure tubulaire (7) en métal, de préférence en acier, sur la surface extérieure de laquelle un matériau élastique (22), par ex. du caoutchouc est appliqué, qui est entourée totalement ou au moins partiellement par une douille extérieure (21), et **en ce que** la douille intérieure (7) de l'élément de palier (5) est serrée au moyen d'une liaison de vissage (6) agissant coaxialement par rapport à l'axe de rotation (14) contre au moins une surface frontale (8) de la rotule pour demi-essieu (9) de la deuxième partie de palier (2).

2. Essieu orientable selon la revendication 1, **caractérisé en ce que** l'élément de palier (5) est configuré comme une douille de palier.

3. Essieu orientable selon la revendication 1 ou 2, **caractérisé en ce que** l'axe de rotation (14) est formé par un goujon fileté de la liaison de vissage (6).

4. Essieu orientable selon une des revendications précédentes, **caractérisé en ce que** l'élément de palier (5) présente une liaison caoutchouc/métal, respectivement est constitué d'une telle.

5. Essieu orientable selon une des revendications précédentes, **caractérisé en ce que** la douille extérieure (21) est configurée comme un tuyau en acier à parois minces et est pressée avec une précontrainte élevée sur le matériau élastique (22).

6. Essieu orientable selon une des revendications précédentes, **caractérisé en ce que** le matériau élastique précontraint (22) s'étend comme une douille (22a) unitaire sur essentiellement la longueur totale de la surface extérieure de la douille intérieure (7).

7. Essieu orientable selon une des revendications 1 à 5, **caractérisé en ce que** le matériau élastique précontraint (22) s'étend comme des douilles (22b) séparées l'une de l'autre seulement sur les deux portions d'extrémité de la surface extérieure de la douille intérieure (7).

8. Essieu orientable selon une des revendications précédentes, **caractérisé en ce que** les douilles (22a,22b) sont formées par un ou plusieurs anneaux, par exemple des joints toriques (22c).

9. Essieu orientable selon une des revendications précédentes, **caractérisé en ce que** le matériau élastique (22) est dans tous les cas renfermé sur une partie de son épaisseur dans une ou plusieurs rainures circonférentielles (25) de la surface extérieure de la douille intérieure (7) et dépasse de la zone voisine de la surface extérieure de la douille intérieure (7).

10. Essieu orientable selon une des revendications 5 à 6, **caractérisé en ce que** les extrémités de la douille extérieure (23) sont arquées vers l'intérieur.

11. Essieu orientale selon une des revendications 7 à 9, **caractérisé en ce que** entre les deux douilles (22b) prévues dans les zones d'extrémité de la douille intérieure (7), en matériau élastique précontraint (22) entre la surface extérieure de la douille intérieure (7) et la surface intérieure de la douille extérieure (23), au moins un palier lisse (26) lubrifié durablement ou un palier à roulements (27) est prévu.

12. Essieu orientable selon une des revendications 4 à 11, **caractérisé en ce que** une douille (22d) en matériau élastique précontraint (22) est prévue seulement sur une moitié de la surface extérieure de la douille intérieure (7) et, sur l'autre moitié, un palier lisse (26) ou palier à roulements (27) est prévu entre la surface extérieure de la douille intérieure (7) et la surface intérieure de la douille extérieure (23).

13. Essieu orientable selon la revendication 11 ou 12, **caractérisé par** un dispositif de lubrification ultérieure (29) prévu pour le palier à roulements (27).

14. Essieu orientable selon une des revendications 11 à 13, **caractérisé en ce que** le palier à roulements (27) est isolé vers l'extérieur par un joint d'étanchéité (28), par ex. un joint d'arbre radial.

15. Essieu orientable selon la revendication 14, **caractérisé en ce que** le joint d'étanchéité (28) est configuré comme un joint d'étanchéité s'ouvrant vers l'extérieur en présence d'une pression interne.

16. Essieu orientable selon une des revendications précédentes, **caractérisé en ce que** le matériau élastique (22) est sécurisé contre un dérapage avec la douille intérieure (7) et/ou la douille extérieure (21) par collage, vulcanisation et/ou conjonction de forme.

17. Essieu orientable selon une des revendications précédentes, **caractérisé en ce que** entre une surface frontale (8) de la rotule pour demi-essieu (9) du corps d'axe (2) et une surface d'appui (20) d'une cavité (19) renfermant la rotule pour demi-essieu (9) de la fourche de guidage (10) est disposée une paire de rondelles (11,11a) maintenues l'une sur l'autre par une tension axiale avec des surfaces d'appui (15,15a) ondulées alternativement l'une à l'autre, moyennant quoi une des rondelles (11a) est reliée de manière solidaire en rotation à la rotule pour demi-essieu (9) et l'autre rondelle (11a) est reliée de manière solidaire en rotation à la fourche de guidage (10), moyennant quoi lors d'un démarrage en ligne droite, les deux rondelles (11,11a) reposent l'une sur l'autre de préférence par toute leur surface ou essentiellement par toute leur surface et forment une position de verrouillage et lorsque les rondelles (11a,11a) sont entraînées en rotation l'une contre l'autre, des espaces vides (16) sont générés sur des portions entre elles et moyennant quoi les zones de surface reposant l'une sur l'autre des surfaces de butée ondulées (15,15a) rétrécissent à mesure que l'angle de direction augmente.
